# EUROPÄISCHE PATENTANMELDUNG

(11) **EP 3 076 377 A1**
(43) Veröffentlichungstag der Anmeldung: **05.10.2016**
(21) Anmeldenummer: 16161172.8
(22) Anmeldetag: 18.03.2016
(51) Int. Cl.: G08G 1/16, B60R 1/00, G01C 21/36, G01S 13/93, G06K 9/00, H04N 7/18

(54) **VERFAHREN ZUM BEREITSTELLEN VON FREIRAUMINFORMATIONEN IN EINEM UMGEBUNGSBEREICH EINES KRAFTFAHRZEUGS ALS SENSOR-ROHDATEN AN EINER KOMMUNIKATIONSSCHNITTSTELLE, SENSOREINRICHTUNG, VERARBEITUNGSEINRICHUNG UND KRAFTFAHRZEUG**

(30) Priorität: 31.03.2015 DE 102015104934
(71) Anmelder: Valeo Schalter und Sensoren GmbH, 74321 Bietigheim-Bissingen (DE)
(72) Erfinder: HEIMBERGER, Markus, 74321 Bietigheim-Bissingen (DE); BARIANT, Jean-Francois, 74321 Bietigheim-Bissingen (DE); DURBEC, Axel, 74321 Bietigheim-Bissingen (DE); MICHAEL, Anto, 74321 Bietigheim-Bissingen (DE)

(57) **Zusammenfassung**

Die Erfindung betrifft ein Verfahren zum Bereitstellen von von einem in einem Umgebungsbereich (7, 8) eines Kraftfahrzeugs (1) erfassten Objekt abhängigen Informationen, bei welchem der Umgebungsbereich (7, 8) mit einer Sensoreinrichtung (4, 10, 11) des Kraftfahrzeugs (1) erfasst wird, und eine Information an einer Kommunikationsschnittstelle im Kraftfahrzeug (1) bereitgestellt wird, wobei Sensor-Rohdaten als Information über einen zwischen der Sensoreinrichtung (4, 10, 11) und einem im Umgebungsbereich (7, 8) erfassten Objekt erkannter Freiraum in einer sensoreinrichtungsseitigen Steuereinheit (3a) abgelegt werden und diese Sensor-Rohdaten an einer mit der sensoreinrichtungsseitigen Steuereinheit (3a) verbundenen Kommunikationsschnittstelle (13) zur Übertragung an und zur Weiterverarbeitung mit einer weiteren Steuereinheit (3b) einer die beiden Steuereinheiten (3a, 3b) umfassenden und zur Erstellung einer Umgebungsbereichskarte ausgebildeten Verarbeitungseinrichtung (12) bereitgestellt wird. Die Erfindung betrifft auch eine Sensoreinrichtung, eine Verarbeitungseinrichtung (12) und ein Kraftfahrzeug (1).

## Beschreibung

Die Erfindung betrifft ein Verfahren zum Bereitstellen von von einem in einem Umgebungsbereich eines Kraftfahrzeugs erfassten Objekt abhängigen Informationen, bei welchem der Umgebungsbereich mit einer Sensoreinrichtung des Kraftfahrzeugs erfasst wird. Eine Information wird an einer Kommunikationsschnittstelle im Kraftfahrzeug bereitgestellt. Des Weiteren betrifft die Erfindung ein Verfahren zum Erzeugen einer Umgebungsbereichskarte eines Umgebungsbereichs eines Kraftfahrzeugs, bei welchem die Umgebungsbereichskarte auf Basis von Informationen, die mit einer Sensoreinrichtung des Kraftfahrzeugs erfasst werden und an einer Kommunikationsschnittstelle bereitgestellt werden, erstellt wird. Darüber hinaus betrifft die Erfindung auch ein Computerprogrammprodukt. Ferner betrifft die Erfindung auch eine Sensoreinrichtung für ein Kraftfahrzeug, mit zumindest einem Sensor und einer Steuereinheit, wobei die Sensoreinrichtung zum Bereitstellen von von einer in einem Umgebungsbereich des Kraftfahrzeugs erfassten Objekt abhängigen Information an einer Kommunikationsschnittstelle im Kraftfahrzeug ausgebildet ist. Des Weiteren betrifft die Erfindung auch eine Verarbeitungseinrichtung zur Erzeugung einer Umgebungsbereichskarte. Darüber hinaus betrifft die Erfindung auch ein Kraftfahrzeug mit einer Sensoreinrichtung und/oder einer Verarbeitungseinrichtung.

Aus der DE 10 2006 049 626 A1 ist ein Verfahren zur Bestimmung der Position und der geometrischen Ausdehnung eines Objekts in einem Umfeld eines Kraftfahrzeugs bekannt. Die Zuordnung eines Messwerts zu einer Population eines Objekts wird dort über ein Gate-Verfahren oder über den Mahalanobis-Abstand durchgeführt.

Darüber hinaus ist aus der DE 10 2009 045 286 A1 ein Verfahren zur Abbildung eines Umfelds eines Kraftfahrzeugs bekannt. Es wird dort vorgesehen, dass detektierte Objekte jeweils mit zwei Koordinatenpunkten und einer zu dem jeweiligen Koordinatenpunkt zugeordneten Positionsunschärfe beschrieben werden. Diese Koordinatenpunkte und die Positionsunschärfe werden als Daten in einer Schnittstelle abgelegt, auf die vom Fahrerassistenzsystem des Fahrzeugs zugegriffen werden kann. Damit die Daten von Fahrerassistenzsystemen verwendet werden können, ist eine allgemeine Objektschnittstelle notwendig, mit der die Eigenschaften des Objekts beschrieben werden.

Bei den bekannten Verfahren ist die Beurteilung einer Zugehörigkeit eines Erfassungspunkts nur eingeschränkt möglich, so dass eine entsprechende Ungenauigkeit einhergeht. Dies ist insbesondere dann auch nachteilig für die konkrete Objektbewertung und somit auch folglich für weitere Aussagen, beispielsweise bezüglich einem Freiraum zwischen einem Objekt und dem Kraftfahrzeug und/oder bezüglich einer Eintragung eines derartigen Objekts in eine Umfeldkarte. Nicht zuletzt ist im Stand der Technik die Bereitstellung von Informationen an einer genannten Schnittstelle verbesserungswürdig, da einerseits nur pauschale und wenig spezifizierte, insbesondere im Hinblick auf eine Weiterverarbeitung oder Weiterleitung wenig angepasste Informationen vorhanden sind und andererseits der Auswerteaufwand für die Informationen, die an dieser Schnittstelle bereits bereitgestellt werden, relativ hoch ist.

Bei der aus dem Stand der Technik bekannten Vorgehensweise werden nur relativ ungenaue Informationen einer sehr allgemeinen Schnittstelle bereitgestellt. Das führt dazu, dass die vorhandenen und bereitgestellten Daten nur zu relativ ungenauen Aussagen über das Objekt führen und daher für die weitere Verarbeitung oder Verwendung von Fahrerassistenzsystemen nur eingeschränkt tauglich sind. Darüber hinaus ist eine derartige allgemeine Schnittstelle, die quasi bereits die eigentliche Verbindung zu dem restlichen Fahrzeugnetzwerk und somit auch zu den Fahrerassistenzsystemen mit deren Steuergeräten führt, nur bedingt tauglich. Denn es kann hier nur pauschal für alle vorhandenen bereitzustellenden Informationen eine Schnittstelle vorgesehen sein, die daher Nachteile wie Kompatibilitätsprobleme zur Anbindung an andere Fahrzeughersteller spezifische Steuergeräte und Netzwerke aufweist. Darüber hinaus ist die individuelle Bereitstellung von individuell bereits vorverarbeiteten Informationen an dieser allgemeinen Schnittstelle nicht möglich. Auch dies führt zu Einbußen und Kompatibilitätsproblemen dann, wenn mit der Kommunikationsschnittstelle auch Steuergeräte von Fahrzeugen unterschiedlicher Fahrzeughersteller angeschlossen werden sollen.

Es ist Aufgabe der vorliegenden Erfindung, ein Verfahren zu schaffen, bei welchem die Bereitstellung von Informationen des Umgebungsbereichs des Kraftfahrzeugs anforderungsgerechter an einer Schnittstelle ermöglicht ist. In dem Zusammenhang ist es auch Aufgabe der vorliegenden Erfindung, ein Computerprogrammprodukt, eine Sensoreinrichtung für ein Kraftfahrzeug, eine Verarbeitungseinrichtung für ein Kraftfahrzeug als auch ein Kraftfahrzeug zu schaffen, bei welchem bzw. bei welcher diese Aufgabe gelöst ist.

Bei einem erfindungsgemäßen Verfahren wird eine von von einem im Umgebungsbereich eines Kraftfahrzeugs erfassten Objekt abhängige Information an einer Kommunikationsschnittstelle im Kraftfahrzeug bereitgestellt. Der Umgebungsbereich wird mit einer Sensoreinrichtung des Kraftfahrzeugs erfasst und die Information wird an einer Kommunikationsschnittstelle bereitgestellt. Ein wesentlicher Gedanke der Erfindung ist darin zu sehen, dass Sensor-Rohdaten als Information über einen Freiraum im zu detektierenden Umgebungsbereich, insbesondere Sensor-Rohdaten als Information über einen zwischen der Sensoreinrichtung und dem Objekt erkannten Freiraum, in einer sensoreinrichtungsseitigen Steuereinheit abgelegt werden. Der Freiraum stellt daher einen objektfreien Bereich dar. Diese Informationen werden dann in dieser sensoreinrichtungsseitigen Steuereinheit an der mit der sensoreinrichtungsseitigen Steuereinheit verbundenen Kommunikationsschnittstelle zur Übertragung an und Weiterverarbeitung mit einer weiteren Steuereinheit einer die beiden Steuereinheiten umfassenden und zur Erstellung einer Umgebungsbereichskarte ausgebildeten Verarbeitungseinrichtung bereitgestellt.

Durch das erfindungsgemäße Verfahren wird es nun ermöglicht, eine spezifischere Information zu einem Objekt zu generieren und diese spezifische Information dann so bereitzustellen, dass sie einer ganz spezifischen Kommunikationsschnittstelle zur Verfügung steht. Denn die Kommunikationsschnittstelle, an der dann diese individuelle Information bereitsteht, ist nicht eine allgemeine Datenschnittstelle, die die Verbindung zum kompletten Netzwerk des Fahrzeugs darstellt, sondern ist demgegenüber quasi eine andere, insbesondere einer derartigen Schnittstelle vorher geschaltete Kommunikationsschnittstelle. Denn sie ist so ausgestaltet und zur Verbindung vorgesehen, dass eine damit verbundene weitere Steuereinheit auch funktionell individuell spezifiziert ist. Denn diese weitere Steuereinheit ist in dem Zusammenhang einer individuell charakterisierten Verarbeitungseinrichtung zugehörig, die für sich gesehen wiederum funktionell dahingehend ausgebildet ist, dass sie anhand der an der Kommunikationsschnittstelle bereitgestellten Informationen und der dann durch die weitere Steuereinheit zusätzlich generierten Informationen eine Umgebungsbereichskarte erstellt. Diese Umgebungsbereichskarte kann dann wiederum über eine weitere Datenschnittstelle in ein Netzwerk des Kraftfahrzeugs übertragen werden und kann somit auch individuellen Fahrerassistenzsystemen zur Verfügung gestellt werden. Insbesondere kann in dem Zusammenhang dann auch eine Übermittlung an eine Anzeigeeinheit erfolgen, wo dann eine derartige Umgebungsbereichskarte auch für einen Nutzer einsehbar beziehungsweise betrachtbar dargestellt wird.

Durch ein derartiges erfindungsgemäßes Verfahren, ist es nunmehr wesentlich bedarfsgerechter ermöglicht, individuelle Informationen in einer individuellen Aufbereitungs- beziehungsweise Vorverarbeitungsstufe an einer ganz spezifischen Kommunikationsschnittstelle bereitzustellen. Gerade mit dem Ziel, dann aus diesen Informationen in Verbindung mit der Steuereinheit der Verarbeitungseinrichtung eine genauere Umgebungsbereichskarte zu erstellen, ist eine derartige Aufteilungsvorgehensweise bei dem Verfahren besonders vorteilhaft.

Durch das erfindungsgemäße Verfahren ist es ganz besonders vorteilhaft, dass die Bandbreite der Kommunikationsschnittstelle zur Übertragung von Daten zwischen den Steuereinheiten reduziert werden kann, da durch das Bereitstellen von nur inhaltspezifischen Sensor-Rohdaten weniger Bandbreitenbedarf auftritt.

Vorzugsweise werden die als Sensor-Rohdaten bereitgestellten und einen Freiraum darstellenden Informationen aus einer Position zumindest eines Sensors der Sensoreinrichtung am Kraftfahrzeug und einer Position des Sensors zu zumindest einem anderen Sensor der Sensoreinrichtung und einem Abstand zwischen dem Sensor und einem erfassten Objekt bestimmt.

Insbesondere werden die Sensor-Rohdaten als einzelne Messpunkte der Sensoreinrichtung bestimmt und die Rohdaten ohne einen aus den Messpunkten erzeugten Polygonzug und somit polygonzugfrei abgelegt und an der Kommunikationsschnittstelle bereitgestellt. Dadurch wird eine besonders hohe Reduzierung der Bandbreiteerfordernisse erreicht und dennoch ausreichend Information über einen Freiraum bereitgestellt, so dass gerade für die Erstellung einer Umgebungsbereichskarte aus den Sensor-Rohdaten eine ausreichende Datenbasis vorliegt.

Insbesondere werden die Sensor-Rohdaten über die Kommunikationsschnittstelle zu der weiteren Steuereinheit übertragen und werden in der weiteren Steuereinheit ausgewertet. Diese Aufteilung der spezifischen Bereitstellung von spezifisch vorverarbeiteten Informationen und der Weiterverarbeitung in getrennten Steuereinheiten führt zu einem besonders vorteilhaften und bedarfsgerechten Datenmanagement.

Bei einer vorteilhaften Ausführung werden die Steuereinheiten der Verarbeitungseinrichtung zum Datenaustausch mit einem Bus der Kommunikationsschnittstelle verbunden.

Insbesondere wird in der weiteren Steuereinheit der Verarbeitungseinrichtung auf Basis der über die verarbeitungseinrichtungsinterne Kommunikationsschnittstelle übermittelten Information eine Umgebungsbereichskarte erstellt.

Die Kommunikationsschnittstelle der Verarbeitungseinrichtung ist somit nur zum Datenaustausch zwischen den Steuereinheiten der Verarbeitungseinrichtung ausgebildet. Insbesondere ist diese Kommunikationsschnittstelle nicht zum Datenaustausch mit einer verarbeitungseinrichtungsexternen Einheit, beispielsweise einem Netzwerk des Kraftfahrzeugs, ausgebildet.

Vorzugsweise werden die Sensor-Rohdaten zum Freiraum in einem Datenformat in der sensorseitigen Steuereinheit bereitgestellt, mit welchem die Information der sensorseitigen Steuereinheit kompatibel für verschiedene, an die Kommunikationsschnittstelle anschließbare weitere Steuereinheiten zur Erzeugung einer Umgebungsbereichskarte ausgebildeten Verarbeitungseinrichtung übertragen werden, insbesondere dort dann weiterverarbeitet werden. Ein derartiges spezifisches Datenformat ermöglicht somit neuartige Informationen einer Sensoreinrichtung flexibel und bedarfsgerechter bereitzustellen.

Vorzugsweise werden die Steuereinheiten einer Verarbeitungseinrichtung des Kraftfahrzeugs funktionell zugeordnet, und durch die Verarbeitungseinrichtung wird abhängig von den Informationen der Sensoreinrichtung eine Umgebungsbereichskarte erstellt beziehungsweise erzeugt, wobei dies insbesondere in der weiteren Steuereinheit durchgeführt wird.

Es kann vorgesehen sein, dass die Umgebungsbereichskarte auf einer Anzeigeeinheit des Kraftfahrzeugs angezeigt wird.

Vorzugsweise wird vorgesehen, dass zu zumindest zwei verschiedenen Zeitpunkten eine Erfassung des Umgebungsbereichs mit der zumindest einen Sensoreinrichtung durchgeführt wird und abhängig von diesen abhängig von Sensorinformationen zu den Zeitpunkten jeweils detektierten Umgebungsfreiraumsituationen wird entschieden, ob ein in zumindest einer Umgebungsfreiraumsituation zumindest vermeintlich im Umgebungsbereich befindliches Objekt bei einem Aktualisieren der Umgebungskarte auf der dann aktualisierten Umgebungskarte enthalten ist bzw. umfasst wird, insbesondere auch auf der Anzeigeeinheit dann insbesondere auch angezeigten Umgebungskarte angezeigt wird. Durch eine derartige Ausgestaltung können die oben genannten Nachteile bei der Verwendung von Sensoren, insbesondere Ultraschallsensoren, zur Umgebungserfassung eines Kraftfahrzeugs Rechnung getragen werden. Das Auftreten von fälschlichen Detektionen von Objekten oder deren falsche Positionierung, die dann auch fälschlicherweise auf der dynamisch veränderlichen und digitalen Umgebungskarte angezeigt werden, kann damit deutlich reduziert werden. Darüber hinaus kann auch das Anzeigen von falschen oder nicht mehr aktuellen Positionen von detektierten Objekten auf der Umgebungskarte ebenfalls zumindest deutlich reduziert werden. Eine dynamische Aktualisierung der Umgebungskarte kann somit bezüglich der Objektanzahl und der Objektposition wesentlich verbessert werden und in dem Zusammenhang eine diesbezüglich auch quasi sehr präzise Echtzeit-Umgebungskarte auf Basis von Ultraschallsensorinformationen erstellt werden.

Vorzugsweise wird vorgesehen, dass eine Vertraubarkeit bzw. eine Existenzwahrscheinlichkeit eines Objekts im Umgebungsbereich bei einem Objekterfassungsvorgang des Sensors mit einem von mehreren unterschiedlichen Konfidenzwerten charakterisiert wird. Dies ist eine vorteilhafte Ausführung, da somit quasi auch durch das Verfahren selbst die detektierten Informationen des Ultraschallsensors bewertet werden und somit die Aktualisierung der Umgebungskarte nochmals präzisiert wird. Gerade durch eine Mehrzahl von unterschiedlichen Konfidenzwerten wird den unterschiedlichen und vielzähligsten Gegebenheiten bei einem Objekterfassungsvorgang Rechnung getragen und somit auch eine Vertraubarkeitsklassifikation sehr bedarfsgerecht und auch insbesondere sehr feinjustiert beziehungsweise detailliert durchgeführt. Durch eine derartige quasi auch Wahrscheinlichkeitsgewichtung der Vertraubarkeit eines Objekterfassungsvorgangs wird die Entscheidung darüber präzisiert, ob dann ein zumindest in einer Umgebungsfreiraumsituation zumindest vermeintlich im Umgebungsbereich befindliches Objekt bei einem Aktualisieren der Umgebungskarte auf der dann aktualisierten Umgebungskarte angezeigt wird. Damit kann somit auch eine verbesserte Präzision für die Entscheidung dahingehend erreicht werden, ob ein Objekt überhaupt auf der aktualisierten Umgebungskarte angezeigt wird, und wenn ja, kann es dann auch mit einer höheren Präzision bezüglich der genauen Lage des Objekts zum Kraftfahrzeug auf der aktualisierten Umgebungskarte angezeigt werden. Beispielsweise kann dann das falsch positionierte Objekt in der Karte gelöscht werden und/oder mit höherer Präzision in die Umfeldkarte bzw. Umgebungskarte eingetragen werden.

Vorzugsweise können mehr als zwei derartige Konfidenzwerte, insbesondere vier unterschiedliche Konfidenzwerte, definiert und vorgegeben werden.

Insbesondere kann hier als ein Konfidenzwert ein Aktiv-Konfidenzwert vorgegeben werden. Dieser charakterisiert eine höchste Vertraubarkeit eines Objekterfassungsvorgangs bezüglich dem Vorhandensein des Objekts und/oder der Position des Objekts.

Beispielsweise charakterisiert dieser Aktiv-Konfidenzwert die Situation, bei welcher quasi mit höchster Sicherheit beurteilt werden kann, dass ein erfasstes Objekt auch nach der zeitlichen Erfassung der zweiten Umgebungsfreiraumsituation noch im Erfassungsbereich des Ultraschallsensors sich befindet und somit auf der aktualisierten Umgebungskarte angezeigt werden soll.

Ein beispielhafter zweiter Konfidenzwert kann beispielsweise ein Verfolgungs-Konfidenzwert sein. Dieser definiert dann insbesondere die Existenzwahrscheinlichkeit, und somit das Vorhandensein und/oder die örtliche Position des Objekts, eines Objekterfassungsvorgangs dahingehend, dass ein Objekt insbesondere im Umgebungsbereich in der zeitlich vorhergehenden ersten Umgebungsfreiraumsituation aktiv gemessen beziehungsweise erfasst wurde und in der zeitlich nachfolgenden zweiten Umgebungsfreiraumsituation dann nicht mehr aktiv erfasst wurde, jedoch darauf rückgeschlossen werden kann, dass sich das Objekt nicht mehr innerhalb des Erfassungsbereichs des Sensors befindet.

Dieser Verfolgungs-Konfidenzwert gibt dann eine Wahrscheinlichkeit an, dass das Objekt noch im Erfassungsbereich sich befindet, die kleiner ist als die diesbezügliche Wahrscheinlichkeit bei dem Aktiv-Konfidenzwert. Dennoch ist hier die Wahrscheinlichkeit des Vorhandenseins des Objekts noch als so hoch zu bewerten, dass zumindest eine Anzeige des Objekts in der aktualisierten Umgebungskarte erfolgt. Die Vertraubarkeit der Position des angezeigten Objekts ist in dem Zusammenhang jedoch reduziert gegenüber dem Aktiv-Konfidenzwert. Bei einem Verfolgungs-Konfidenzwert ist jedoch die Situation so einzuschätzen, dass es, beispielsweise aufgrund der gebotenen Sicherheit, dennoch hilfreich und zweckdienlich ist, das Objekt auf der aktualisierten Umgebungskarte weiterhin anzuzeigen.

Vorzugsweise wird ein dritter Konfidenzwert als Löschungs-Konfidenzwert vorgegeben. Bei diesem Löschungs-Konfidenzwert wird die Wahrscheinlichkeit, dass ein Objekt in dem Erfassungsbereich des Ultraschallsensors vorhanden ist, kleiner eingestuft als bei dem Verfolgungs-Konfidenzwert. Bei diesem dritten Löschungs-Konfidenzwert werden insbesondere Situationen berücksichtigt, bei denen der Ultraschallsensor aufgrund seiner Anordnung und/oder aufgrund der Ausgestaltung des Objekts dieses Objekt bei einer Umgebungsfreiraumsituation nicht mehr detektieren kann, obwohl es noch in seinem Erfassungsbereich sich befindet. Dies kann beispielsweise bei sehr niedrigen Objekten der Fall sein, die sich dann in einem Freiraum zwischen dem Ultraschallsensor und einem höheren, durch den Ultraschallsensor detektierten Objekt befinden. Beispielsweise kann dies auch bei statischen und somit ortsfesten Objekten in spezifischen Situationen der Fall sein, beispielsweise wenn die Hauptachse des Sensors deutlich unterschiedlich zu einem Winkel von 90°zu dem Objekt orientiert ist u nd dadurch das Objekt nicht erfasst wird. Wenn bei diesem Konfidenzwert der Zustand, dass das statische Objekt korrekt detektiert wurde, immer und ohne Ausschluss gültig wäre, könnte hier wiederum eine Eingruppierung anhand des oben genannten Konfidenzwerts, insbesondere auch des Aktiv-Konfidenzwerts, erfolgen. Da jedoch ein derartiges Objekt auch dynamisch oder falsch detektiert sein kann, ist dieser dritte Löschungs-Konfidenzwert für die Entscheidungsprüfung sehr vorteilhaft. Bei diesem dritten Löschungs-Konfidenzwert wird somit eine Situation bewertet, die eine Existenzwahrscheinlichkeit eines Objekts bei einem Objekterfassungsvorgang dahingehend beurteilt, dass die Wahrscheinlichkeit des Nochvorhandenseins des Objekts in dem Erfassungsbereich des Ultraschallsensors zwar niedriger als beim Verfolgungs-Konfidenzwert ist, jedoch aufgrund der Situation auch eine Wahrscheinlichkeit besteht, dass das Objekt noch in dem Erfassungsbereich sich befindet, jedoch nicht detektiert werden kann. Insbesondere wird dann bei dieser Beurteilung das Objekt noch auf der aktualisierten Karte angezeigt, wobei auch hier dann ähnlich wie beim Verfolgungs-Konfidenzwert die örtliche Lage dieses Objekts gegenüber der tatsächlichen Lage im Umgebungsbereich mit einer Ungenauigkeit beziehungsweise mit einer Abweichung versehen sein kann.

Ein vorteilhafter vierter Konfidenzwert wird durch einen Gelöscht-Konfidenzwert vorgegeben. Durch diesen Gelöscht-Konfidenzwert kann mit einer gegenüber dem Löschungs-Konfidenzwert höheren Wahrscheinlichkeit davon ausgegangen werden, dass sich das Objekt nicht mehr im Erfassungsbereich des Ultraschallsensors befindet. Die Genauigkeit eines Objekterfassungsvorgangs wird somit durch diesen vierten Konfidenzwert dahingehend beurteilt, dass mit höchster Wahrscheinlichkeit und somit zumindest mit an Sicherheit grenzender Wahrscheinlichkeit dieses Objekt nicht mehr im Erfassungsbereich des Ultraschallsensors ist. Das zumindest vermeintlich detektierte Objekt wird dann in diesem Fall auf Basis der Konfidenzwertbeurteilung auf der aktualisierten Karte nicht mehr angezeigt.

Es sei auch erwähnt, dass das erfindungsgemäße Verfahren für unterschiedlichste Anwendungen eingesetzt werden kann. Beispielsweise kann es bei unterschiedlichen Umfelderfassungssystemen, insbesondere Parkassistenzsystemen, welche zum Durchführen eines zumindest semi-autonomen Parkvorgangs ausgebildet sind, eingesetzt werden. Auch kann die Vorgehensweise des erfindungsgemäßen Verfahrens zusätzlich oder anstatt dazu bei einem Bremsassistenzsystem, wie beispielsweise einem ACC (Adaptive Cruise Control)-System Verwendung finden. Insbesondere ist vorgesehen, dass bei diesen unterschiedlichen Verwendungssituationen und somit auch unterschiedlichen Verkehrssituationen das Fahrerassistenzsystem unterschiedlich reagiert und in dem Zusammenhang auch unterschiedliche Reaktionen bezüglich der Objekte und deren Existenzwahrscheinlichkeit bei einem Objekterfassungsvorgang erforderlich sind.

Vorzugsweise wird eine Zuordnung eines spezifischen Konfidenzwerts zu einem Objekterfassungsvorgang abhängig von zumindest einer erfassten Umgebungsfreiraumsituation und/oder zumindest eines vorgegebenen Referenzfreiraums und/oder einem Vergleich zumindest einer Umgebungsfreiraumsituation mit einem Referenzfreiraum und/oder der Art eines Objekts durchgeführt. Als eine Art eines Objekts können beispielsweise die Form des Objekts und somit auch die Ausmaße des Objekts oder der Typ des Objekts definiert werden. Zusätzlich oder anstatt dazu kann auch eine Bewertung über eine Bewegung des Objekts relativ zum Ultraschallsensor und somit auch zum Kraftfahrzeug berücksichtigt werden, wobei hier somit dann auch statische oder dynamische Objekte umfasst sind. Durch diese vorteilhafte Ausführung wird somit quasi überprüft, insbesondere durch eine Klassifikation oder einen Vergleich, wie sich die tatsächliche Umgebungsfreiraumsituation darstellt und wie sie im Lichte der Konfidenzwertkriterien beurteilt und quasi eingruppiert werden kann. Dies ist dahingehend auch sehr vorteilhaft, dass somit die Aussagepräzision dahingehend erhöht ist, ob eine Anzeige eines Objekts auf einer aktualisierten Umgebungskarte erfolgen kann, und somit auch präziser Aussage darüber erfolgen kann, ob das Objekt überhaupt auf der Umgebungskarte aktualisiert angezeigt werden soll und wenn ja, wie lagegenau es dann in der aktualisierten Umgebungskarte relativ zum Kraftfahrzeug und/oder zu einem anderen gegebenenfalls anzuzeigenden Objekt angezeigt werden kann.

Durch diese Konfidenzwert-Klassifizierungen für die Anzeige-Entscheidungsprüfung können auch die Informationen an einen Fahrzeugnutzer wesentlich verbessert werden und darüber hinaus auch die Reaktion eines auf diesen Informationen des erfindungsgemäßen Verfahrens basierend arbeitenden Fahrerassistenzsystems verbessert werden. Ob und gegebenenfalls wie ein Fahrerassistenzsystem dann reagiert, kann somit sehr individueller und angepasster erfolgen.

Indem die oben genannte Zuordnung eines spezifischen Konfidenzwerts nicht nur anhand eines dieser konkreten Kriterien erfolgt, sondern anhand von vorzugsweise mehreren derartigen Kriterien erfolgt, können die oben genannten Vorteile nochmals verbessert werden.

Ein Freiraum bzw. eine Freiraumsituation stellt allgemein einen zumindest Teilbereich des Erfassungsbereichs zumindest eines Sensors dar, welcher insbesondere zu einem spezifischen Zeitpunkt dahingehend beurteilt ist, wie frei er von Objekten ist. Dies trifft auf die tatsächliche Verkehrssituation zu, die durch eine Umgebungsfreiraumsituation charakterisiert ist, als auch für einen Referenzfreiraum, der durch eine vordefinierte Verkehrssituation charakterisiert ist.

Bei einer vorteilhaften Ausführung ist vorgesehen, dass eine Mehrzahl von unterschiedlichen Referenzfreiräumen vorgegeben wird, welche somit zunächst dann allgemein definiert und insbesondere in einem Fahrerassistenzsystem abgelegt und abgespeichert werden. Es wird insbesondere zumindest abhängig von einem Vergleich der Umgebungsfreiraumsituation mit zumindest einem Referenzfreiraum und/oder einem eine Genauigkeit dieses Objekterfassungsvorgangs des Ultraschallsensors charakterisierenden Konfidenzwert, wie er oben in vorteilhaften Ausführungen genannt ist, das Enthaltensein oder Nicht-Enthaltensein, insbesondere das dann auch Anzeigen oder Nicht-Anzeigen, des Objekts in der aktualisierten Umgebungskarte durchgeführt. Dies ist eine besonders hervorzuhebende Ausführungsform, denn durch eine derartige Vorgabe und Klassifizierung bzw. Kategorisierung von spezifischen modellierten Freiraumsituationen, die durch die Referenzfreiräume abgebildet werden, kann die Aussage über die tatsächliche Situation, die durch die Umgebungsfreiraumsituationen dargestellt wird, nochmals verbessert eingeschätzt und beurteilt werden. Indem durch diese Mehrzahl von Referenzfreiräumen spezifischen und gegebenenfalls auch bezüglich einer Wahrscheinlichkeitshäufigkeit in der tatsächlichen Verkehrswelt priorisierten Situationen Rechnung getragen wird, kann auch hier bereits die Aussagegenauigkeit durch den Vergleich zumindest eines Referenzfreiraums mit den Umgebungsfreiraumsituationen die Entscheidungsfindung über das Darstellen eines Objekts auf einer aktualisierten Umgebungskarte verbessert werden. Diese Referenzräume sind daher ganz besonders wesentliche Vorgaben für die Entscheidungsfindung und erhöhen die Präzision über die Entscheidung dahingehend wesentlich, ob ein Objekt auf der aktualisierten Umgebungskarte angezeigt werden soll und wenn ja, ob in dem Zusammenhang dann, insbesondere auch unter Berücksichtigung der Konfidenzwerte, auch eine besonders exakte und aktualisierte Position des Objekts auf der Umgebungskarte angezeigt werden kann. Die Echtzeitausgestaltung einer aktualisierten Umgebungskarte auf Basis von Sensoren, insbesondere Ultraschallsensoren, kann dadurch wesentlich verbessert werden.

Aufgrund der äußerst großen Komplexität und Vielfalt von auftretenden Umgebungssituationen, wie sie in einem Umgebungsbereich eines Kraftfahrzeugs in der tatsächlichen Realität auftreten können, kann durch diese Modellierung mit Referenzfreiräumen eine sehr hervorzuhebende Strukturierung dieser Vielfalt vorgegeben und eine besonders analytische und detailangepasste Auswahl und Eingruppierung der tatsächlich erfassten Situation ermöglicht werden. Durch diese Ausgestaltung kann damit auch sehr zielgerichtet und somit auch schnell eine sehr hohe verlässliche Aussage über die zu bewertende Anzahl der Umgebungsfreiraumsituationen und die dadurch erhaltenen Informationen erfolgen.

Es wird in dem Zusammenhang auch die Möglichkeit geschaffen, dass die Umgebungsfreiraumsituationen mit zumindest zwei Referenzräumen verglichen werden, was die oben genannten Vorteile nochmals begünstigt. Insbesondere kann somit vorgesehen sein, dass die Auswahl, ob die Umgebungsfreiraumsituationen mit nur einem Referenzfreiraum oder zumindest zwei Referenzfreiräumen verglichen wird, auf Basis von Informationen zumindest der ersten Umgebungsfreiraumsituation und/oder zumindest der zweiten Umgebungsfreiraumsituation erfolgen. Es kann in dem Zusammenhang auch vorgesehen sein, dass auf Basis der Reihenfolge der Umgebungsfreiraumsituationen und den daraus erhaltenen Informationen, die sich somit insbesondere in zeitlicher Abfolge spezifizieren lassen, die Anzahl und/oder welche Referenzfreiraummodelle, die zum Vergleich herangezogen werden, ausgewählt wird.

Es kann jedoch auch vorgesehen sein, dass bei einer pauschalen Vorgabe eine gewisse Prioritätsreihenfolge der Referenzfreiräume vorgegeben wird, die dann in dieser Reihenfolge zum Vergleich mit den Umgebungsfreiraumsituationen ausgewählt werden. Ebenso kann vorgesehen sein, dass beispielsweise abhängig davon, welches Referenzfreiraummodell zum Vergleich mit den Umgebungsfreiraumsituationen ausgewählt wurde, ein zweites Referenzfreiraummodell ausgewählt wird. Gegebenenfalls kann in dem Zusammenhang beispielsweise anhand des Referenzfreiraums, mit welchem ein erster Vergleich mit den Umgebungsfreiraumsituationen durchgeführt wird, bereits eine doch schon sehr spezifische und zielführende weitere Vergleichsbildung mit einem dann weiteren spezifischen Referenzfreiraummodell erfolgen, durch welches aufbauend auf den Vergleich mit dem ersten Referenzfreiraummodell auch eine gewisse Abhängigkeit dahingehend gegeben ist, dass die Aussagepräzision über das Anzeigen eines Objekts auf einer aktualisierten Umgebungskarte schneller, zielführender und präziser ermöglicht ist.

Ist vorteilhafterweise eine Verknüpfung beziehungsweise ein Zusammenhang eines Konfidenzwerts des Konfidenzwertmodells mit einem Referenzfreiraummodell im Hinblick auf die Entscheidung über eine Anzeige eines Objekts auf der aktualisierten Karte vorgegeben, wird dann durch diese Berücksichtigung zumindest eines Referenzfreiraums und eines Konfidenzwerts die Entscheidung, ob ein Objekt auf einer aktualisierten Karte angezeigt werden soll, nochmals detaillierter und genauer.

Es kann auch vorgesehen werden, dass abhängig von der Anzahl von in den Umgebungsfreiraumsituationen detektierten Objekten und/oder von der Art von in den Umgebungsfreiraumsituationen detektierten Objekten und/oder der örtlichen Lage eines in zumindest einer Umgebungsfreiraumsituation detektierten Objekts zum Kraftfahrzeug und/oder einer örtlichen Lageveränderung eines in den Umgebungsfreiraumsituationen detektierten Objekts zum Kraftfahrzeug ein spezifischer Referenzfreiraum aus der Mehrzahl der Referenzfreiräume für den Vergleich ausgewählt wird. Auch durch diese vorteilhafte Ausführung kann eine schnellere Aussage darüber, ob ein Objekt auf einer aktualisierten Umgebungskarte angezeigt werden soll, ermöglicht werden. Da sich hier auch aus der bereits oben genannten sehr hohen Vielfalt von Alltagssituationen im Verkehr verschiedenste komplexe Zusammenhänge ergeben können, kann durch diese Merkmalspezifikation die Entscheidungsfindung bezüglich der Gestaltung der aktualisierten Umgebungskarte differenziert und verbessert werden.

Bei einer weiteren vorteilhaften Ausführung wird abhängig von der Anzahl von in den Umgebungsfreiraumsituationen detektierten Objekten und/oder von der Art von in den Umgebungsfreiraumsituationen detektierten Objekten und/oder der örtlichen Lage eines in zumindest einer Umgebungsfreiraumsituation detektierten Objekts zum Kraftfahrzeug und/oder einer örtlichen Lageveränderung eines in den Umgebungsfreiraumsituationen detektierten Objekts zum Kraftfahrzeug die Anzahl der für den Vergleich zu berücksichtigenden Referenzfreiräume bestimmt. Auch dadurch lassen sich dann die bereits oben genannten Vorteile erreichen beziehungsweise verbessern.

Vorzugsweise wird ein erster Referenzfreiraum als Objektfreiraum definiert, bei welchem für die Bewertung eines Objekts ein Abstand des Objekts zum Ultraschallsensor und die Orientierung des Objekts zum Ultraschallsensor berücksichtigt werden. Diese beiden Parameter betreffend den Abstand und die Orientierung und erlauben eine sehr genaue Aussagemöglichkeit über das tatsächliche Vorhandensein eines Objekts in einem Erfassungsbereich des Ultraschallsensors. Lassen sich somit diese Parameterwerte in zumindest einer Umgebungsfreiraumsituation detektieren, so kann dann auch sehr exakt, insbesondere unter Berücksichtigung eines spezifischen Konfidenzwerts, insbesondere unter Berücksichtigung des Aktiv-Konfidenzwerts, mit höchster Wahrscheinlichkeit die Aussage getroffen werden, dass das erfasste Objekt in der jeweiligen Umgebungsfreiraumsituation tatsächlich vorhanden ist und tatsächlich auch an der entsprechenden Position vorhanden ist. Trifft dies dann auf beide Umgebungsfreiraumsituationen zu, so ist quasi mit höchster Sicherheit die Situation gegeben, dass das Objekt tatsächlich noch vorhanden ist und an der entsprechenden Position vorhanden ist, sodass es dann auch exakt in der aktualisierten Umgebungskarte angezeigt.

Tritt hingegen dann eine Situation auf, bei welcher der Abstand und die Orientierung eines Objekts nur in einer Umgebungsfreiraumsituation genau bestimmt werden kann, so kann dann abhängig davon, ob dieses in der ersten Umgebungsfreiraumsituation oder der zweiten Umgebungsfreiraumsituation erfolgt ist, wiederum mit einem dann spezifischen Konfidenzwert auf die Wahrscheinlichkeit des Vorhandenseins rückgeschlossen werden. Durch dieses ganz spezifische, auf charakteristischen Parametern eines Objekts basierende Freiraummodell können die genannten entsprechenden Aussagen getroffen werden.

In einer bevorzugten Ausführung wird zum Vergleichen der Umgebungsfreiraumsituationen mit diesem ersten Referenzfreiraum in der ersten Umgebungsfreiraumsituation ein erfasster Abstandswert bei einer spezifischen Orientierung des Objekts, bei welchem das Objekt erstmals detektiert wurde, als Referenzabstandswert, gespeichert. Zumindest bei einer in der zweiten Umgebungsfreiraumsituation auftretenden relativen Lageveränderung zwischen dem Sensor und dem Objekt wird überprüft, ob das Objekt in der zweiten Umgebungsfreiraumsituation erfasst wurde. Bei einem nicht mehr Erfassen des Objekts in dieser zweiten Umgebungsfreiraumsituation durch den Sensor wird insbesondere das Objekt auf der aktualisierten Umgebungskarte aufgrund der Kriterien des ersten Referenzfreiraums, insbesondere eines spezifischen, insbesondere zugeordneten, Konfidenzwerts, nicht mehr angezeigt. Es wird dann bei dieser spezifischen Ausführungsform mit entsprechender Wahrscheinlichkeit davon ausgegangen, dass sich aufgrund einer relativen Lageveränderung zwischen dem Kraftfahrzeug und somit auch dem Sensor und dem Objekt zeitlich folgend auf die erste Umgebungsfreiraumsituation das Objekt wohl nicht mehr in dem Erfassungsbereich des Sensors befindet und daher die Relevanz zur Anzeige auf der aktualisierten Umgebungskarte zumindest so gering ist, dass das Anzeigen nicht mehr erforderlich erscheint.

Bei einer weiteren vorteilhaften Ausführung wird ein zweiter Referenzfreiraum als Sensorfreiraum definiert, bei welchem für die Bewertung eines Objekts berücksichtigt wird, ob es in einer Umgebungsfreiraumsituation zwar im ersten Erfassungsbereich des Sensors sich befindet, jedoch nicht vom Sensor als Objekt erfasst werden kann. Vorzugsweise wird bei diesem Sensorfreiraum im Unterschied zum Objektfreiraum die Sicht vom Sensor her betrachtet. Insbesondere dann, wenn bei diesem Sensorfreiraummodell auch die Bedingungen des Objektfreiraums nicht erfüllt sind und beispielsweise auch für ein niedriges Objekt der Abstand abhängig von der Bewegungsrichtung zwischen dem Kraftfahrzeug und dem detektierten Objekt sich in diese Bewegungsrichtung dahingehend verändert, dass es von einem Referenzabstandswert, zu den das Objekt erstmals detektiert wurde, verändert und somit dann das Objekt nicht mehr detektiert werden kann, obwohl es sich in dem Erfassungsbereich des Sensors befindet, ist dieser Sensorfreiraum für die Charakterisierung der Umgebungsfreiraumsituation besonders bedeutend. Es können in dem Zusammenhang zwei mögliche Situationen zugrundeliegen. Beispielsweise kann hier vorgesehen sein, dass das Objekt als statisches Objekt korrekt detektiert wurde. In diesem Fall ist das Objekt als durchaus noch vorhanden zu beurteilen. Es kann jedoch nicht erfasst werden, da es aufgrund der Objekteigenschaften und der relativen Lageveränderung in dieser zweiten Umgebungsfreiraumsituation vom Sensor nicht mehr erfasst werden kann. Beispielsweise kann aufgrund der Geometrie oder der Abmessungen dann, wenn sich das Fahrzeug von dem Objekt wegbewegt und bereits ein Abstand eingetreten ist, der größer als der Referenzabstandswert ist, die Detektion nicht mehr möglich sein. Dies kann beispielsweise bei sehr dünnen oder kleinen Objekten der Fall sein, die dann mit zunehmendem Abstand ab dem Referenzabstandswert nicht mehr vom Sensor erfasst werden können.

Eine zweite Situation lässt sich dahingehend charakterisieren, dass das Objekt ein dynamisches Objekt ist, welches sich somit selbst gegenüber dem Kraftfahrzeug bewegt, oder ein falsch detektiertes Objekt ist. In diesen beiden Unterfällen kann dann davon ausgegangen werden, dass das Objekt nicht mehr im Erfassungsbereich des Sensors vorhanden ist. Insbesondere unter Berücksichtigung dieser spezifischen Situation und eines dann insbesondere spezifisch zugeordneten Konfidenzwerts kann dann die Situation dahingehend beurteilt werden, dass mit höchster Wahrscheinlichkeit das Objekt nicht mehr im Erfassungsbereich des Ultraschallsensors ist und somit nicht mehr auf der aktualisierten Umgebungskarte angezeigt werden soll.

Da es insbesondere jedoch nicht möglich ist, insbesondere nicht mit gewünschter Aussagepräzision möglich ist, auf Basis der Informationen des Sensors zwischen einem dynamischen und einem statischen Objekt zu unterscheiden, ist in einer bevorzugten Ausführung vorgesehen, eine derartige Situation dann so zu beurteilen, dass zwar mit hoher Wahrscheinlichkeit das Objekt nicht mehr in dem Erfassungsbereich vermutet wird, dennoch die Wahrscheinlichkeit, dass es noch in dem Erfassungsbereich sein könnte, so beurteilt wird, dass dies bezüglich, insbesondere im Hinblick auf die Sicherheitsanforderungen, eine Anzeige des Objekts in der aktualisierten Umgebungskarte erfolgen sollte. Bei diesen Ausgestaltungen ist dann gemäß den bereits oben genannten vorteilhaften Definitionen von verschiedenen Konfidenzwerten jedoch dann die exakte Lage des Objekts in der Umgebungskarte, insbesondere relativ zum Kraftfahrzeug, mit einer gewissen Ungenauigkeit versehen.

Wenn eine Messung des Sensors erhältlich ist, ist in bevorzugter Weise der Sensorfreiraum auf die Messdistanz begrenzt, da keine Beurteilungen am Objekt erfolgen können, die außerhalb dieser maximalen Messdistanz liegen, insbesondere aufgrund der Tatsache, dass mit einem Sensor kein Hindurchschauen durch Objekte erfolgen kann und somit nicht beurteilt werden kann, was sich hinter diesen detektierten, insbesondere hohen, Objekten befindet.

Vorzugsweise wird beim Vergleichen der Umgebungsfreiraumsituationen mit dem zweiten Referenzfreiraum ein Objekt auf der aktualisierten Karte, insbesondere aufgrund eines spezifischen Konfidenzwerts, angezeigt, wenn ein Objekt in der Umgebungsfreiraumsituation von dem Sensor erfasst wurde, in der zweiten Umgebungsfreiraumsituation aber das Objekt nicht mehr von dem Sensor erfasst wurde, aber zumindest mit einer Wahrscheinlichkeit größer einem Schwellwert angenommen werden kann, dass sich das Objekt weiterhin im Erfassungsbereich des Sensors befindet.

Bei einer weiteren vorteilhaften Ausführung wird ein dritter Referenzfreiraum als Aktivfreiraum definiert, bei welchem der Raum zwischen dem Sensor und einem durch den Sensor erfassten Objekt als frei von zumindest erfassten Objekten vergleichbar hohen Objekten, insbesondere frei von Objekten größer einem Höhenschwellwert, betrachtet wird. Auch dies ist eine besonders vorteilhafte Definition eines Referenzfreiraums, bei welchem ein spezifischer Teilbereich von einem Erfassungsbereich eines Sensors betrachtet wird. Da es gerade vielerlei Situationen geben kann, bei denen zwischen einem erfassten Objekt und einem Sensor im Erfassungsbereich des Sensors auch im Vergleich zum erfassten Objekt niedrige Objekte vorhanden sind, die dann von dem Sensor nicht mehr explizit detektiert werden können, jedoch insbesondere im Erfassungsbereich vorhanden sind, erhöht diese Ausgestaltung die Aussagepräzision bezüglich der aktualisierten Umgebungskarte betreffend eine Objektdarstellung wesentlich. Es kann somit auch durch das erfindungsgemäße Verfahren beziehungsweise eine vorteilhafte Ausgestaltung davon in einem spezifischen Teilbereich des Erfassungsbereichs, wie er dann durch den Aktivfreiraum definiert wird, eine genauere Aussage über vermeintlich darin befindliche Objekte getroffen werden und insbesondere diesbezüglich singulär oder in einer vorteilhaften Ausführung abhängig von anderen Referenzfreiräumen und den Umgebungsfreiraumsituationen eine Aussage über ein vermeintliches Objekt in diesem Aktivfreiraum getroffen werden.

In einer vorteilhaften Ausführung wird beim Vergleichen der Umgebungsfreiraumsituationen mit dem dritten Referenzfreiraum, nämlich dem Aktivfreiraum, ein in zumindest einer Umgebungsfreiraumsituation vermeintlich zwischen dem Sensor und dem erfassten Objekt erfasstes, insbesondere zum erfassten Objekt vergleichbar hohes, Objekt auf der aktualisierten Karten, insbesondere aufgrund eines spezifischen Konfidenzwerts, nicht angezeigt. Es kann dann mit entsprechender, insbesondere vorgegebener, Wahrscheinlichkeit davon ausgegangen werden, dass in diesem Aktivfreiraum kein weiteres, insbesondere zu beachtendes und wesentliches Objekt vorhanden ist. Somit ist bei einer bevorzugten Ausführung mit dem Aktivfreiraum auch eine Situation umfasst, bei welcher der Sensor mit höchster Vertraubarkeit, insbesondere mit einer Vertraubarkeit betreffend den Aktiv-Konfidenzwert, detektiert, und eine Position der Messung ist mit entsprechender Vertraubarkeit und Wahrscheinlichkeit deklarierbar. So kann mit einer weiteren entsprechend hohen Wahrscheinlichkeit auch davon ausgegangen werden, dass kein weiteres Objekt, welches höher einem Höhenschwellwert ist, in dem Aktivfreiraum zwischen dem Sensor und dem aktiv detektierten Objekt, welches auf der dem Sensor abgewandten Seite somit den Aktivfreiraum quasi begrenzt, mehr vorhanden ist, wenn es insbesondere höher dem Höhenschwellwert ist. Bevorzugt kann vorgesehen sein, dass Objekte, die niedriger dem Höhenschwellwert sind, auch wiederum aufgrund eines insbesondere dann spezifischen Konfidenzwerts als anzeigewürdig in der aktuellen Umgebungskarte eingestuft werden und entsprechend dann auch auf der aktuellen Umgebungskarte angezeigt werden. Abhängig davon, ob diese dazwischenliegende Objekte dann mit entsprechender Existenzwahrscheinlichkeit, insbesondere abhängig vom Abstand und der Orientierung, erfasst werden können, kann unter Berücksichtigung des Objektfreiraums und/oder insbesondere des Aktiv-Konfidenzwerts auch die örtliche Lage dieser Objekte dann sehr genau bestimmt und in der aktualisierten Umgebungskarte nicht nur die Anzeige als solche, sondern auch die Lage sehr präzise dargestellt werden.

Bei einer weiteren vorteilhaften Ausführung wird ein vierter Referenzfreiraum als Hintergrundfreiraum definiert, bei welchem Objekte in einem Raum des Erfassungsbereichs des Sensors betrachtet werden, der sich auf der dem Sensor abgewandten Seite im Anschluss an den Aktivfreiraum erstreckt. Auch dadurch ist somit ein weiterer Teilbereich des Erfassungsbereichs lokal spezifiziert und wird individuell im Hinblick auf Detektion von Objekten exakt beurteilt und eingestuft.

Vorzugsweise wird beim Vergleichen der Umgebungsfreiraumsituationen mit dem vierten Referenzfreiraum abhängig von einem wiederum spezifischen Konfidenzwert eines in dem Hintergrundfreiraum zumindest in einer Umgebungsfreiraumsituation erfassten Objekts entschieden, ob das Objekt auf der aktualisierten Umgebungskarte angezeigt wird. Insbesondere ist somit bei diesem Freiraum erforderlich, dass zunächst ein Aktivfreiraum und/oder ein Sensorfreiraum zugrundegelegt und Umgebungsfreiraumsituationen entsprechend durch den Vergleich charakterisiert werden können, um dann auch diesen Hintergrundfreiraum analysieren zu können. Erst dann können quasi bei dieser Ausführung die Lage und das Ausmaß des Hintergrundfreiraums bestimmt werden.

Es kann auch vorgesehen sein, dass eine Blindzone bzw. ein Nahbereich, in dem der Sensor detektiert, jedoch aufgrund funktioneller Einschränkung nichts detektieren kann, so dass keine Aussage über das Vorhandensein eines Objekts im Umgebungsbereich möglich ist und somit auch keine Aussage möglich ist, ob ein Freiraum vorhanden ist oder nicht. Dies kann bei einem Ultraschallsensor aufgrund seiner Ausschwingzeit der Fall sein. Bei einer Kamera kann dies aufgrund von Reflexionen der Fall sein. Bei einer derartigen Situation wird dann an die Schnittstelle die Information bereitgestellt, dass keine Aussage über einen Freiraum möglich ist.

Diese vorteilhaften Ausführungen ermöglichen eine situationsgerechte Bestimmung eines Freiraums. Es werden dazu wiederum die individuellen Schritte in den jeweiligen Steuereinheiten durchgeführt.

Des Weiteren betrifft die Erfindung auch ein Verfahren zum Erzeugen einer Umgebungsbereichskarte eines Umgebungsbereichs eines Kraftfahrzeugs, bei welchem die Umgebungsbereichskarte auf Basis von Informationen, die mit einer Sensoreinrichtung des Kraftfahrzeugs erfasst werden, erstellt wird. Ein wesentlicher Gedanke der Erfindung ist darin zu sehen, dass die Sensor-Rohdaten zur Freirauminformation bei dem erfindungsgemäßen Verfahren oder einer vorteilhaften Ausgestaltung davon, wie es oben erläutert wurde, bereitgestellt werden und bei der Erzeugung der Umgebungsbereichskarte berücksichtigt werden.

Des Weiteren kann vorgesehen sein, dass die Umgebungsbereichskarte zur Verwendung bei einem Fahrerassistenzsystem zur Verfügung gestellt wird und nicht weiter angezeigt wird. Es kann jedoch auch vorgesehen sein, dass eine derartige Umgebungsbereichskarte dann an einer Anzeigeeinheit des Kraftfahrzeugs bildhaft dargestellt wird, so dass auch ein Fahrzeuginsasse sehen kann, welche Objekte sich im Umgebungsbereich des Fahrzeugs befinden. Dies kann insbesondere bei einem als Parkassistenzsystem ausgebildeten Fahrerassistenzsystems vorteilhaft sein, wenn in eine Parklücke eingeparkt wird oder aus einer Parklücke ausgeparkt wird.

Des Weiteren betrifft die Erfindung ein Computerprogrammprodukt, welches zum Ausführen eines Verfahrens gemäß den oben genannten Aspekten ausgebildet ist, wenn das Computerprogrammprodukt auf einer programmierbaren Computereinrichtung ausgeführt wird. Die Computereinrichtung ist vorzugsweise in dem Kraftfahrzeug angeordnet.

Des Weiteren betrifft die Erfindung eine Sensoreinrichtung für ein Kraftfahrzeug mit zumindest einem Sensor und einer Steuereinheit, wobei die Sensoreinrichtung zum Bereitstellen von von einer in einem Umgebungsbereich eines Kraftfahrzeugs erfasste Objekt abhängigen Information ausgebildet ist. Die Sensoreinrichtung ist darüber hinaus zur Bereitstellung der Information an einer Kommunikationsschnittstelle im Kraftfahrzeug ausgebildet. Es ist vorgesehen, dass Sensor-Rohdaten als Information über einen Freiraum im zu detektierenden Umgebungsbereich, insbesondere Sensor-Rohdaten als Information über einen zwischen der Sensoreinrichtung und dem Objekt erkannten Freiraum, in einer sensoreinrichtungsseitigen Steuereinheit abgelegt sind, und diese Informationen an der mit der sensoreinrichtungsseitigen Steuereinheit verbundenen Kommunikationsschnittstelle zur Übertragung an und zur Weiterverarbeitung mit einer weiteren Steuereinheit einer die beiden Steuereinheiten umfassenden und zur Erstellung einer Umgebungsbereichskarte ausgebildeten Verarbeitungseinrichtung bereitgestellt sind.

Des Weiteren betrifft die Erfindung eine Verarbeitungseinrichtung mit einer erfindungsgemäßen Sensoreinrichtung und mit einer weiteren Steuereinheit, die über eine verarbeitungseinrichtungsinterne Kommunikationsschnittstelle mit der sensoreinrichtungsseitigen Steuereinheit verbunden ist, wobei insbesondere die weitere Steuereinheit zur Erstellung einer Umgebungsbereichskarte auf Basis der über die Kommunikationsschnittstelle übertragenen Informationen ausgebildet ist. Die Umgebungsbereichskarte ist dann von der Verarbeitungseinrichtung bereitgestellt.

Besonders bevorzugt ist es, dass die weitere Steuereinheit auch zum Empfangen und zur Verarbeitung von Informationen einer von der Sensoreinrichtung umfassend die erste Steuereinheit funktionell unterschiedliche weitere Sensoreinrichtung ausgebildet ist. Dadurch ist die weitere Steuereinheit auch dazu ausgebildet, vorzugsweise auf Basis der Informationen der ersten Sensoreinrichtung und auf Basis der Informationen der direkt von der weiteren Sensoreinrichtung erhaltenen Informationen eine Umgebungsbereichskarte zu erstellen.

Vorteilhafte Ausführungen des erfindungsgemäßen Verfahrens sind als vorteilhafte Ausführungen der Verarbeitungseinrichtung und des Kraftfahrzeugs anzusehen. Die gegenständlichen Komponenten der Verarbeitungseinrichtung und des Kraftfahrzeugs sind dazu jeweils dazu ausgebildet, die jeweiligen Verfahrensschritte durchzuführen. Des Weiteren betrifft die Erfindung ein Kraftfahrzeug mit einer erfindungsgemäßen Sensoreinrichtung und/oder einer erfindungsgemäßen Verarbeitungseinrichtung.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Ausführungsbeispiele der Erfindung werden nachfolgend anhand schematischer Zeichnungen näher erläutert. Es zeigen:
- Fig. 1: eine schematische Draufsicht auf ein Ausführungsbeispiel eines erfindungsgemäßen Kraftfahrzeugs mit einem Ausführungsbeispiel einer erfindungsgemäßen Verarbeitungseinrichtung; und
- Fig. 2: eine schematische Darstellung eines Ausführungsbeispiels einer erfindungsgemäßen Verarbeitungseinrichtung.

In den Figuren werden gleiche oder funktionsgleiche Elemente mit den gleichen Bezugszeichen versehen.

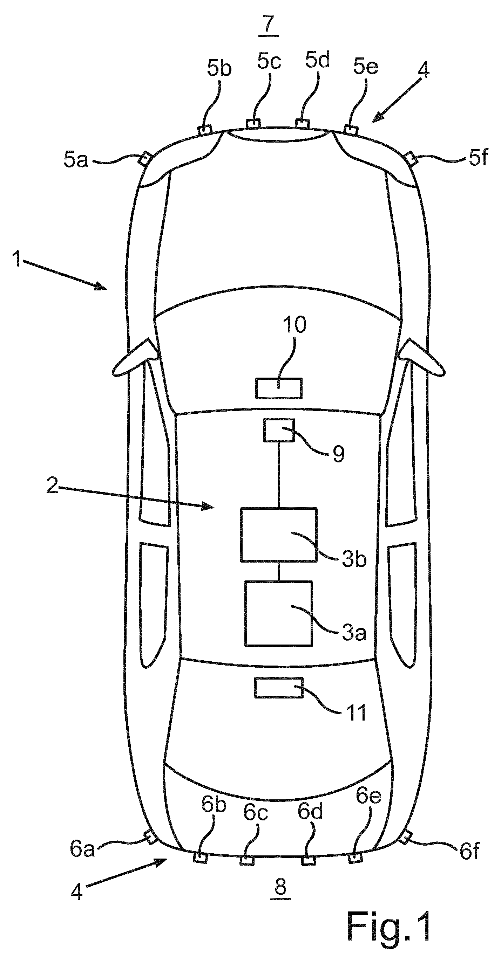

In Fig. 1 ist in einer schematischen Draufsichtdarstellung ein Kraftfahrzeug 1 gezeigt, welches ein Fahrerassistenzsystem 2 aufweist. Das Fahrerassistenzsystem 2 kann beispielsweise ein Parkassistenzsystem sein.

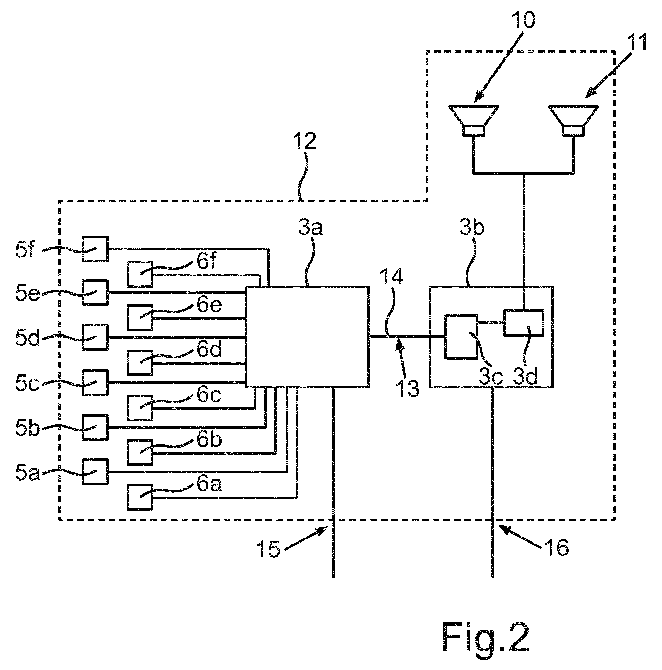

Das Fahrerassistenzsystem 2 umfasst eine Auswerteeinrichtung bzw. Verarbeitungseinrichtung 12 (Fig. 2), umfassend eine erste Steuereinheit 3a und eine weitere Steuereinheit 3b, und eine Ultraschall-Detektionseinrichtung 4 als erste Sensoreinrichtung. Die Ultraschall-Detektionseinrichtung 4 umfasst im Ausführungsbeispiel am Kraftfahrzeug 1 frontseitig angeordnete Ultraschallsensoren. Hier sind im Ausführungsbeispiel sechs Ultraschallsensoren 5a, 5b, 5c, 5d, 5e und 5f vorhanden. Darüber hinaus sind im Ausführungsbeispiel auch in einem Heckbereich des Kraftfahrzeugs 1 weitere Ultraschallsensoren 6a, 6b, 6c, 6d, 6e und 6f verbaut. Mit den frontseitigen Ultraschallsensoren 5a bis 5f kann ein frontseitiger und seitlicher Umgebungsbereich 7 erfasst werden. Demgegenüber kann mit den heckseitigen Ultraschallsensoren 6a bis 6f ein heckseitiger und seitlicher Umgebungsbereich 8 des Kraftfahrzeugs 1 erfasst werden. In dem Zusammenhang sind die Ultraschallsensoren 5a bis 5f und 6a bis 6f vorzugsweise so angeordnet, dass der gesamte, um das Kraftfahrzeug 1 vorhandene Umgebungsbereich, der dann aus den Umgebungsbereichen 7 und 8 zusammengesetzt ist, erfasst wird.

Das Kraftfahrzeug 1 umfasst darüber hinaus eine Anzeigeeinheit 9, auf der bildhafte Darstellungen erfolgen können. Auf dieser Anzeigeeinheit 9 kann dann insbesondere eine Umgebungsbereichskarte beziehungsweise eine Umfeldkarte angezeigt werden. Dabei wird dann das Kraftfahrzeug 1 beispielsweise auch in dieser Draufsichtdarstellung gezeigt und der Umgebungsbereich dargestellt, sodass auch in dem Umgebungsbereich 7 und/oder 8 detektierte Objekte angezeigt und für einen Fahrzeuginsassen erkenntlich sind. Dies kann beispielsweise bei einem Einparkvorgang oder einem Ausparkvorgang vorteilhaft sein.

Mit dem Fahrerassistenzsystem 2 ist es ermöglicht, dass im Umgebungsbereich 7 und/oder Umgebungsbereich 8 vorhandene Objekte detektiert werden und auch auf Basis der von Ultraschallsensoren 5a bis 5f und/oder 6a bis 6f erhaltenen Informationen Aussagen über den Zustand von derartigen Objekten gegeben werden können.

Insbesondere ist vorgesehen, dass in der Verarbeitungseinrichtung 12, die insbesondere zur Erstellung einer Umgebungsbereichskarte ausgebildet ist, die Informationen zumindest einiger Ultraschallsensoren 5a bis 5f sowie 6a bis 6f verarbeitet werden.

Das Kraftfahrzeug 1 umfasst im Ausführungsbeispiel neben der Ultraschall-Detektionseinrichtung 4, die eine erste Sensoreinrichtung darstellt, zumindest eine zur ersten Sensoreinrichtung funktionell unterschiedlich arbeitende zweite Sensoreinrichtung, die im Ausführungsbeispiel durch eine Frontkamera 10 und/oder eine Heckkamera 11 gebildet ist. Die Frontkamera 10 und/oder die Heckkamera 11 detektieren ebenfalls in dem Umgebungsbereich 7 beziehungsweise in dem Umgebungsbereich 8, so dass auch damit Objekte erfasst werden können.

Die sensoreinrichtungsseitige Steuereinheit 3a und die weitere Steuereinheit 3b, die auch eine Fusions-Steuereinheit darstellt, sind Bestandteile der Verarbeitungseinrichtung 12, wie sie in Fig. 2 beispielhaft gezeigt ist. Die Verarbeitungseinrichtung 12 ist zur Erzeugung einer Umgebungsbereichskarte ausgebildet. Die Umgebungsbereichskarte kann als Basisinformation für ein Fahrerassistenzsystem, beispielsweise ein Parkassistenzsystem, zugrundegelegt werden. Sie kann zusätzlich auch auf einem Bildschirm beziehungsweise der Anzeigeeinheit 9 angezeigt werden.

Die weitere Steuereinheit 3b ist vorteilhafterweise dazu ausgebildet, neben Informationen, die sie von der sensoreinrichtungsseitigen Steuereinheit 3a und somit der Steuereinheit, die zu der Ultraschall-Detektionseinrichtung 4 zugehörig ist, auch zur Verarbeitung beziehungsweise zur Weiterverarbeitung von Informationen, die sie von einer dazu funktionell unterschiedlichen Sensoreinrichtung, beispielsweise der Frontkamera 10 und/oder der Heckkamera 11 erhält, ausgebildet sein. Da in dem Zusammenhang die Informationen der unterschiedlichen Sensoreinrichtungen verarbeitet werden, insbesondere fusioniert werden, ist auch die Bezeichnung Fusions-Steuereinheit entsprechend zu verstehen.

Bei der Darstellung in Fig. 2 sind die Steuereinheiten 3a und 3b durch eine Kommunikationsschnittstelle 13 zum Datenaustausch verbunden. Diese Kommunikationsschnittstelle 13 umfasst einen Bus 14, über den der Datenaustausch zwischen den Steuereinheiten 3a und 3b erfolgt. Diese Kommunikationsschnittstelle 13 ist somit eine funktionell und bezüglich ihrer zu verbindenden Einheiten exklusive Schnittstelle, die zu dieser Verarbeitungseinrichtung 12, die funktionell individuell ausgebildet ist, nämlich zum Erstellen einer Umgebungsbereichskarte, zugehörig ist. Die weitere Steuereinheit 3b umfasst eine Verarbeitungseinheit 3c, die die von der Steuereinheit 3a übertragene Information weiterverarbeitet. Diese Verarbeitungseinheit 3c ist darüber hinaus mit einer Prozessoreinheit 3d, insbesondere einem digitalen Signalprozessor, der weiteren Steuereinheit 3b verbunden. Bei dieser Prozessoreinheit 3d werden die von der weiteren Sensoreinrichtung, insbesondere der Frontkamera 10 und/oder der Heckkamera 11, erhaltenen Informationen aufbereitet.

Wie darüber hinaus zu erkennen ist, ist die gesamte Verarbeitungseinrichtung 12 über zumindest eine weitere Datenschnittstelle 15, insbesondere über zwei weitere

Datenschnittstellen 15 und 16 an ein Netzwerk des Kraftfahrzeugs angebunden. Im Ausführungsbeispiel ist dazu vorgesehen, dass die sensoreinrichtungsseitige Steuereinheit 3a direkt über die Datenschnittstelle 15 mit dem Netzwerk verbunden ist und die weitere Steuereinheit 3b mit der dazu separaten Datenschnittstelle 16 direkt mit dem Netzwerk verbunden ist.

Die Sensoreinrichtung ist im Ausführungsbeispiel die bereits genannte Ultraschall-Detektionseinrichtung 4, die neben den Ultraschallsensoren 5a bis 5f und 6a bis 6f auch die sensorseitige Steuereinheit 3a aufweist.

Diese spezifische Information, die in der sensoreinrichtungsseitigen Steuereinheit 3a abgelegt wird, wird an dieser insbesondere nur verarbeitungseinrichtungsinterne Einheiten verbindenen Kommunikationsschnittstelle 13 in einem spezifischen Datenformat bereitgestellt und zwar derart, dass sie an die weitere Steuereinheit 3b der Verarbeitungseinrichtung 12 einfach übertragen und dort weiterverarbeitet werden kann, um dann insbesondere die Umgebungsbereichskarte zu erstellen.

Das Datenformat ist dabei so gestaltet, dass eine kompatible Weiterverarbeitung der bereitgestellten Information in unterschiedlichen weiteren Steuereinheiten erfolgen kann. Dies ist dann vorteilhaft, wenn die weitere Steuereinheit 3b beispielsweise fahrzeugherstellerindividuell ausgestaltet ist. Die Kompatibilität dieses Datenformats ist daher ein wesentlicher Vorteil, um fahrzeugherstellerübergreifend die gleiche Struktur der Verarbeitungseinrichtung gestalten zu können und dennoch eine individuelle Weiterverarbeitung der von der sensoreinrichtungsseitigen Steuereinheit 3a generierten Information durchführen zu können.

Es werden Sensor-Rohdaten als Information eines zwischen der Sensoreinrichtung und einem im Umgebungsbereich 7 oder 8 erfassten Objekt erkannten Freiraums in der sensoreinrichtungsseitigen Steuereinheit 3a abgelegt und an der verarbeitungseinrichtungsinternen Kommunikationsschnittstelle 13 bereitgestellt, sodass die informationsinhaltsspezifischen Sensor-Rohdaten auch zur internen weiteren Verarbeitung in der Verarbeitungseinrichtung 12 an die verarbeitungseinrichtungsinterne weitere Steuereinheit 3b übertragen werden können.

Wie aus der Darstellung in Fig. 2 zu erkennen ist, ist die Kommunikationsschnittstelle 13 lediglich zum Datenaustausch zwischen den verarbeitungseinrichtungsinternen Steuereinheiten 3a und 3b vorgesehen. Sie verbindet daher beziehungsweise ermöglicht einen Datenaustausch daher nur zwischen verarbeitungseinrichtungsinternen Einheiten.

## Patentansprüche

1. Verfahren zum Bereitstellen von von einem in einem Umgebungsbereich (7, 8) eines Kraftfahrzeugs (1) erfassten Objekt abhängigen Informationen, bei welchem der Umgebungsbereich (7, 8) mit einer Sensoreinrichtung (4, 10, 11) des Kraftfahrzeugs (1) erfasst wird, und eine Information an einer Kommunikationsschnittstelle im Kraftfahrzeug (1) bereitgestellt wird,
**dadurch gekennzeichnet, dass**
Sensor-Rohdaten als Information über einen zwischen der Sensoreinrichtung (4, 10, 11) und einem im Umgebungsbereich (7, 8) erfassten Objekt erkannter Freiraum in einer sensoreinrichtungsseitigen Steuereinheit (3a) abgelegt werden und diese Sensor-Rohdaten an einer mit der sensoreinrichtungsseitigen Steuereinheit (3a) verbundenen Kommunikationsschnittstelle (13) zur Übertragung an und zur Weiterverarbeitung mit einer weiteren Steuereinheit (3b) einer die beiden Steuereinheiten (3a, 3b) umfassenden und zur Erstellung einer Umgebungsbereichskarte ausgebildeten Verarbeitungseinrichtung (12) bereitgestellt wird.

2. Verfahren nach Anspruch 1,
**dadurch gekennzeichnet, dass**
die als Sensor-Rohdaten bereitgestellten und einen Freiraum darstellenden Informationen aus einer Position zumindest eines Sensors (5a bis 5f; 6a bis 6f, 10, 11) der Sensoreinrichtung (4, 10, 11) am Kraftfahrzeug (1) und einer Position des Sensors (5a bis 5f; 6a bis 6f, 10, 11) zu zumindest einem anderen Sensor (5a bis 5f; 6a bis 6f, 10, 11) der Sensoreinrichtung (4, 10, 11) und einem Abstand zwischen dem Sensor (5a bis 5f; 6a bis 6f, 10, 11) und einem erfassten Objekt bestimmt werden.

3. Verfahren nach Anspruch 1 oder 2,
**dadurch gekennzeichnet, dass**
die Sensor-Rohdaten als einzelne Messpunkte der Sensoreinrichtung (4, 10, 11) bestimmt werden und die Sensor-Rohdaten ohne einen aus den Messpunkten erzeugten Polygonzug abgelegt und an der Kommunikationsschnittstelle (13) bereitgestellt werden.

4. Verfahren nach einem der vorhergehenden Ansprüche,
**dadurch gekennzeichnet, dass**
die Sensor-Rohdaten über die Kommunikationsschnittstelle (13) zu der weiteren Steuereinheit (3b) übertragen werden und in der weiteren Steuereinheit (3b) ausgewertet werden.

5. Verfahren nach Anspruch 4,
**dadurch gekennzeichnet, dass**
die Steuereinheiten (3a, 3b) der Verarbeitungseinrichtung (12) zum Datenaustausch mit einem Bus (14) der Kommunikationsschnittstelle (13) verbunden werden.

6. Verfahren nach Anspruch 4 oder 5,
**dadurch gekennzeichnet, dass**
in der weiteren Steuereinheit (3b) auf Basis der über die verarbeitungseinrichtungsinternen Kommunikationsschnittstelle (13) übermittelten Sensor-Rohdaten eine Umgebungsbereichskarte erstellt wird.

7. Verfahren nach einem der vorhergehenden Ansprüche,
**dadurch gekennzeichnet, dass**
die Informationen der Sensor-Rohdaten in einem Datenformat in der sensorseitigen Steuereinheit (3a) bereitgestellt werden, mit welchem die Informationen der sensorseitigen Steuereinheit (3a) kompatibel für verschiedene, an die Kommunikationsschnittstelle (13) anschließbare weitere Steuereinheiten (3a, 3b) übertragen werden kann, insbesondere dort dann weiterverarbeitet werden kann.

8. Verfahren zum Erzeugen einer Umgebungsbereichskarte eines Umgebungsbereichs (7, 8) eines Kraftfahrzeugs (1), bei welchem die Umgebungsbereichskarte auf Basis von Informationen, die mit einer Sensoreinrichtung (4, 10, 11) des Kraftfahrzeugs (1) erfasst werden, erstellt wird, **dadurch gekennzeichnet, dass**
die als Sensor-Rohdaten gebildeten Informationen nach einem Verfahren gemäß der vorhergehenden Ansprüche bereitgestellt werden und bei der Erzeugung der Umgebungsbereichskarte berücksichtigt werden.

9. Computerprogrammprodukt, zum Ausführen eines Verfahrens nach einem der vorhergehenden Ansprüche, wenn das Computerprogrammprodukt auf einer programmierbaren Computereinrichtung ausgeführt wird.

10. Sensoreinrichtung (4, 10, 11) für ein Kraftfahrzeug (1), mit zumindest einem Sensor (5a bis 5f, 6a bis 6f, 10, 11) und einer Steuereinheit (3a), wobei die Sensoreinrichtung (4, 10, 11) zum Bereitstellen von von einem in einem Umgebungsbereich (7, 8) eines Kraftfahrzeugs (1) erfassten Objekt abhängigen Informationen an einer Kommunikationsschnittstelle im Kraftfahrzeug (1) ausgebildet ist,
**dadurch gekennzeichnet, dass**
Sensor-Rohdaten als Information über einen zwischen der Sensoreinrichtung (4, 10, 11) und einem im Umgebungsbereich (7, 8) erfassten Objekt erkannten Freiraum in der sensoreinrichtungsseitigen Steuereinheit (3a) abgelegt sind, und diese Sensor-Rohdaten an einer mit der sensoreinrichtungsseitigen Steuereinheit (3a) verbundenen Kommunikationsschnittstelle (13) zur Übertragung an und zur Weiterverarbeitung mit einer weiteren Steuereinheit (3b) einer die beiden Steuereinheiten (3a, 3b) umfassenden und zur Erstellung einer Umgebungsbereichskarte ausgebildeten Verarbeitungseinrichtung (12) bereitgestellt sind.

11. Verarbeitungseinrichtung (12) mit einer Sensoreinrichtung (4, 10, 11) nach Anspruch 10, und mit einer weiteren Steuereinheit (3b), die über eine verarbeitungseinrichtungsinternen Kommunikationsschnittstelle (13) mit der sensoreinrichtungsseitigen Steuereinheit (3a) verbunden ist, wobei die weitere Steuereinheit (3b) zur Erstellung einer Umgebungsbereichskarte auf Basis der über die Kommunikationsschnittstelle (13) übertragenen Information ausgebildet ist, und insbesondere die Umgebungsbereichskarte von der Verarbeitungseinrichtung (12) bereitgestellt ist.

12. Verarbeitungseinrichtung (12) nach Anspruch 11,
**dadurch gekennzeichnet, dass**
die weitere Steuereinheit (3b) auch zum Empfangen und zur Verarbeitung von Informationen einer von der Sensoreinrichtung (4), umfassend die erste Steuereinheit (3a), funktionell unterschiedlichen weiteren Sensoreinrichtung (10, 11) ausgebildet ist.

13. Kraftfahrzeug mit einer Sensoreinrichtung nach Anspruch 10 und/oder mit einer Verarbeitungseinrichtung nach Anspruch 11 oder 12.
